# EUROPEAN PATENT APPLICATION

(11) **EP 1 441 556 A1**
(43) Date of publication of application: **28.07.2004**
(21) Application number: 03765279.9
(22) Date of filing: 10.07.2003
(51) Int. Cl.: H04Q 7/38, H04L 12/56

(54) **COMMUNICATION SYSTEM, COMMUNICATION TERMINAL DEVICE, AND HANDOVER METHOD**

(30) Priority: 19.07.2002 JP 2002211516
(71) Applicant: MATSUSHITA ELECTRIC INDUSTRIAL CO., LTD., Kadoma-shi, Osaka 571-8501 (JP)
(72) Inventor: AOYAMA, Takahisa, Yokohama-shi, Kanagawa 233-0007 (JP); HOSHINO, Masayuki, Yokosuka-shi, Kanagawa 239-0806 (JP); MIYOSHI, Kenichi, Yokohama-shi, Kanagawa 236-0058 (JP); EBIKO, Keisuke, Yokosuka-shi, Kanagawa 239-0807 (JP)
(74) Representative: Grünecker, Kinkeldey, Stockmair & Schwanhäusser Anwaltssozietät
(86) International application number: PCT/JP2003/008748
(87) International publication number: WO 2004/010726

(57) **Abstract**

There are provided a communication system where foreign kinds of networks are mixed such as a wireless LAN and a mobile phone system, wherein the hand-over of a communication terminal apparatus between the networks is performed smoothly, and the communication terminal apparatus, and a hand-over method. A relaying section provided for the communication terminal apparatus notifies information about the communication terminal apparatus used in a network to another network.

## Description

### TECHNICAL FIELD

The present invention relates to a communication system, a communication terminal apparatus and a hand-over method.

### BACKGROUND ART

To date, in addition to the spread of mobile phones, a hotspot service using a wireless LAN (Local Area Network) has been drawing attention.

Moreover, as the next-generation mobile communication that is going to be standardized in the future as Beyond IMT2000, such a system is considered desirable as one which is serviced by a plurality of foreign kinds of networks such as a hotspot and an ITS (Intelligent Transport System) rather than supported by a cellular network only as in a mobile phone system.

Such a system where foreign kinds of networks provide services for communication terminal apparatuses such as mobile phones is proposed in "Morihisa Hyakuna, 'Proposal (1) of ALL-IP Mobile Network Architecture--Evolution from IMT2000―', MoMuC2002-1, TECHNICAL REPORT OF IEICE, May, 2002" and the like.

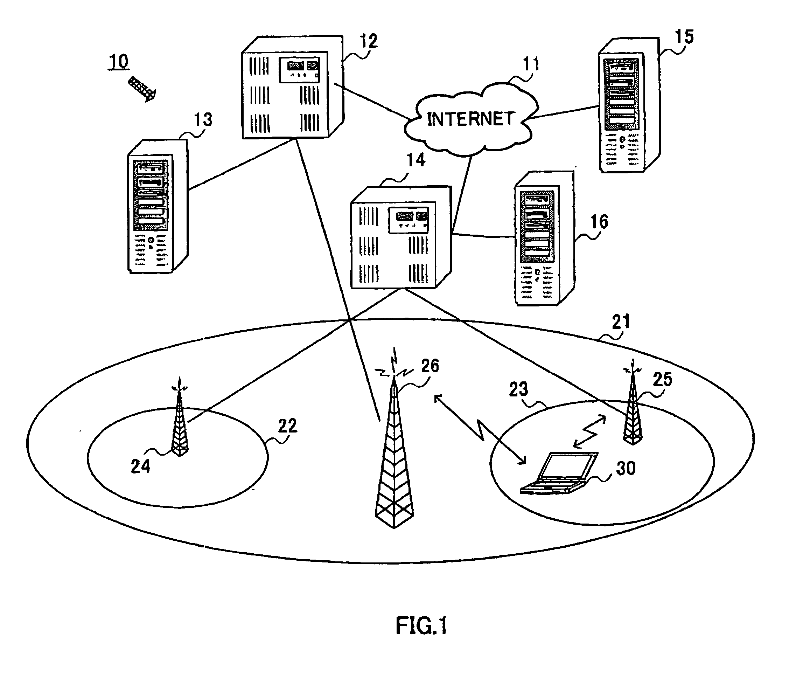

FIG. 1 is a diagram showing the envisioned configuration of a system providing services via foreign kinds of networks such as a cellular network and a hotspot network.

In a communication system 10 of FIG. 1, a cellular gateway 12 covers a cellular network service area 21 via a base station 26, and a hotspot gateway 14 covers hotspot service areas 22 and 23 respectively via access routers 24 and 25.

A correspondent node 15 is configured to provide various services such as content for the cellular network service area 21 via the Internet 11, the cellular gateway 12, and the base station 26 and to provide various services such as content for the hotspot service areas 22 and 23 via the Internet 11, the hotspot gateway 14, and the access routers 24 and 25.

A cellular home agent 13 and a hotspot home agent 16 are for finding out the presences of communication terminal apparatuses 30 in the cellular network service area 21, the hotspot service areas 22 and 23, and are equivalent to home agents (HA) in Mobile IP being standardized in IETF (The Internet Engineering Task Forum), or an HLR (Home Location Register) and a VLR (Visitor Location Register) in W-CDMA (Wideband-Code Division Multiple Access) being standardized in 3GPP and the like.

In the communication system shown in FIG. 1, the networks are connected to the Internet 11 via the respective different gateways (cellular gateway 12 and hotspot gateway 14).

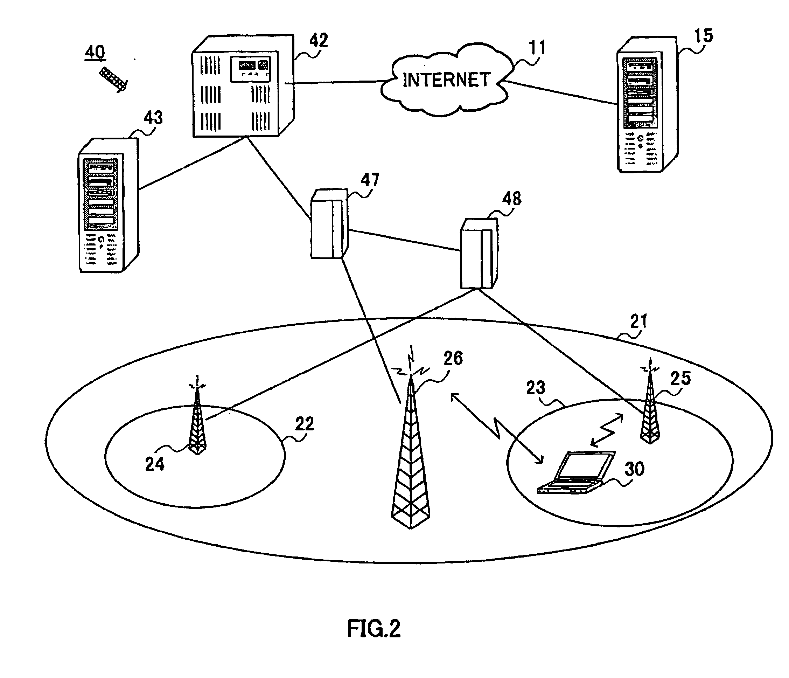

Furthermore, FIG. 2 where the constituents corresponding to those of FIG. 1 are indicated by the same reference numerals shows a communication system 40 where an operator providing both a cellular service and a hotspot service exists, and where the networks providing these services are connected via a same gateway 42 to the Internet 11.

In FIG. 2, the gateway 42 provides services for the cellular network service area 21 via an anchor router 47 and provides services for the hotspot service area 22 or 23 via the anchor router 47 and a router 48.

In the communication systems 10 and 40, it is necessary to achieve a seamless handover between the foreign kinds of networks. That is, in the case where a communication terminal apparatus 30 is an apparatus capable of receiving both the cellular network service and hotspot service, it is necessary to arrange such that a user having the communication terminal apparatus 30 with him receives the cellular network service when being outside the hotspot service area 22 or 23 and, when having entered the hotspot service area 22 or 23, receives services provided from the hotspot service without communication interruption.

At present, also in the standardization of the third-generation mobile communication, a study to realize dual mode terminal apparatuses supporting both the cellular network service and hotspot service is under way, and is described in, for example, "TSG-SA WG1 (Services) meeting #15 S1-020637".

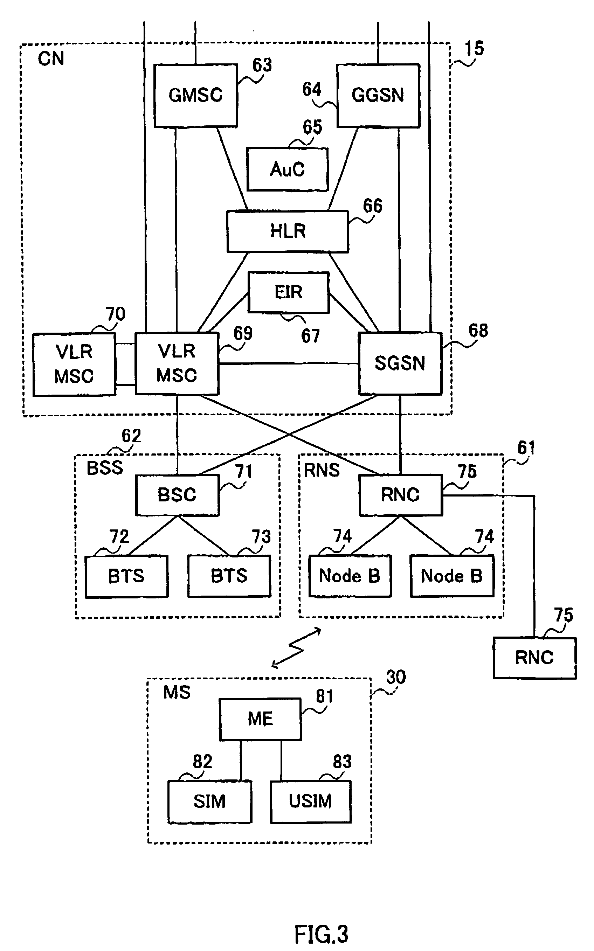

Moreover, "3G TS23.002 V3.5.0 (2002-01) Network Architecture (Release 1999)" presents a description related to the 3G (the third generation) network, and a communication system as shown in FIG. 3 is under consideration. In that description, a GMSC-MSC system including GMSC (Gateway MSC) 63 and MSC (Mobile Switching Center) 69 is a circuit switch (CS) network, and a GGSN-SGSN system including GGSN (Gateway GPRS Support System) 64 and SGSN (Serving GPRS Support System) 68 is a packet switch (PS) network. Moreover, BSS (Base Station System) 62 is a network for GSM (Global System for Mobile Communication), and RNS (Radio Network System) 61 is a network for W-CDMA. Hence, in performing packet communication, GGSN (Gateway GPRS Support System: an access point with the Internet) 64, SGSN (Serving GPRS Support System: one for paging, accounting, and the like) 68, RNC (Radio Network Controller: Radio Resource Manager) 75, Node-B74, HLR (Home Location Register: a section where user information is registered) 66, AuC (Authentication Center) 65, EIR (Equipment Identity Register) 67 and the like are necessary. A network of W-CDMA includes the above-mentioned constituents. In FIG. 3, BSS 62 includes BSC (Base Station Controller) 71 and BTS (Base Transceiver Station) 72, and communication terminal apparatus 30 includes ME (Mobile Equipment) 81, SIM (Subscriber Identity Module) 82, and USIM (Universal SIM) 83.

In the case of the hand-over between the foreign kinds of networks, QoS (Quality of Service) information of the networks before the hand-over, throughput-related information such as bit rates of the networks before the hand-over, information such as authentication of the networks before the hand-over, and information about communication terminal apparatuses for which to perform the hand-over such as IP address information used before the hand-over (hereinafter, called management control information) need to be exchanged between the networks.

In this case, in a system having different gateways as the communication system 10 shown in FIG. 1, the control stations exchange these information via the Internet, and thus the problems occur that delay is large, the amount of signal processing associated with the hand-over is large, and the securing of security is difficult.

Also in the communication system 40 having one gateway described with FIG. 2, there is the problem that delay occurs due to exchanging various kinds of management control information between the networks.

Furthermore, in the communication system shown in FIG. 3, because the management control information is exchanged along complex routes, there are the problems that the time required for the hand-over is long, delay occurs, and the amount of signal processing associated with the hand-over is large.

### DISCLOSURE of INVENTION

An object of the present invention is to provide a communication system that can smoothly perform the hand-over between foreign kinds of networks, a communication terminal apparatus, and a hand-over method.

According to a mode of the present invention, a communication system comprises a plurality of different network systems; and a communication terminal apparatus that communicates with each of the plurality of network systems and relays information about the communication terminal apparatus used in one of the plurality of network systems to another network system.

According to another mode of the present invention, a communication terminal apparatus comprises a communication section that communicates with each of a first network system and a second network system; and a relaying section that relays information about the communication terminal apparatus received from the first network system to the second network system.

According to yet another mode of the present invention, in the communication terminal apparatus having the above configuration, the relaying section is configured to convert the information about the communication terminal apparatus received from the first network system to a format usable in the second network system.

According to still another mode of the present invention, in the communication terminal apparatus having the above configuration, the relaying section is configured to encapsulate, on a per packet basis in IP-layer, data and header portions together of the information about the communication terminal apparatus received from the first network system, and adds the IP address of a destination in the second network system as header information to each encapsulated packet as a unit.

According to yet another mode of the present invention, a hand-over method comprises the steps of detecting that a communication terminal apparatus has moved from a first network system to a second network system; and relaying information about the communication terminal apparatus used in the first network system to the second network system via the communication terminal apparatus, based on a result of the detecting.

### BRIEF DESCRIPTION OF THE DRAWINGS

FIG. 1 is a diagram for explaining a problem in a prior art;
FIG. 2 is a diagram for explaining a problem in a prior art;
FIG. 3 is a block diagram showing the configuration of a conventional communication system in a prior art;
FIG. 4 is a block diagram showing the configuration of a communication system according to embodiment 1 of the present invention;
FIG. 5 is a sequence view for explaining the operation in the case of hand-over according to embodiment 1.
FIG. 6 is a block diagram showing the configuration of a communication system according to embodiment 2 of the present invention;
FIG. 7A is a diagram for explaining the encapsulation of an IP packet for a communication terminal apparatus according to embodiment 2;
FIG. 7B is a diagram for explaining the encapsulation of an IP packet for the communication terminal apparatus according to embodiment 2; and
FIG. 7C is a diagram for explaining the encapsulation of an IP packet for the communication terminal apparatus according to embodiment 2.

### Best Mode for Carrying out the Invention

The framework concept of the present invention is to smoothly perform the hand-over for a communication terminal apparatus in a communication system by transferring information about the communication terminal apparatus used in a hand-over originating network system via the communication terminal apparatus to a hand-over destination.

Embodiments of the present invention will be described in detail below with reference to the drawings.

### (Embodiment 1)

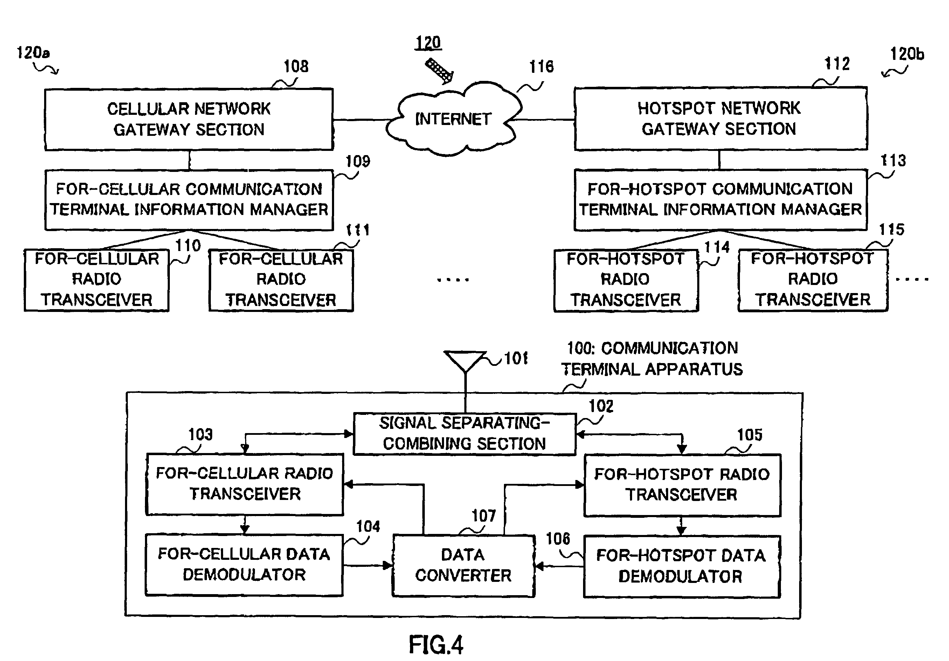

FIG. 4 is a block diagram showing the configuration of a communication system 120 according to embodiment 1 of the present invention.

In the communication system 120 of FIG. 4, foreign kinds of network systems 120a and 120b are connected via the Internet 116. The first network system 120a has a cellular network gateway section 108 connected to the Internet 116, and information such as content is supplied from this cellular network gateway section 108 via a for-cellular communication terminal information manager 109 to each for-cellular radio transceiver 110, 111, or so forth. By this means, the information such as various content can be provided for communication terminal apparatuses 100 in the service areas of the for-cellular radio transceivers 110, 111, and so forth, and also information sent from a communication terminal apparatus 100 can be transferred via the Internet 116 to another communication terminal apparatus or a server.

The for-cellular radio transceivers 110, 111, and so forth are so-called base stations or the like. Furthermore, the for-cellular communication terminal information manager 109 may be distributed to various nodes.

On the other hand, the second network system 120b has a hotspot network gateway section 112 connected to the Internet 116, and information such as content is supplied from this hotspot network gateway section 112 via a for-hotspot communication terminal information manager 113 to each for-hotspot radio transceiver 114, 115, or so forth. By this means, the information such as various content can be provided for communication terminal apparatuses 100 in the service areas of the for-hotspot radio transceivers 114, 115, and so forth, and also information sent from a communication terminal apparatus 100 can be transferred via the Internet 116 to another communication terminal apparatus or a server. The hotspot is an information service using a wireless LAN (Local Area Network).

The for-hotspot radio transceivers 114, 115, and so forth are so-called access routers or the like. Furthermore, the for-hotspot communication terminal information manager 113 may be distributed to various nodes.

The communication terminal apparatus 100 supplies a signal received via an antenna 101 to a signal separating-combining section 102. The signal separating-combining section 102 separates the received signal into a signal received from the cellular network and a signal received from the hotspot network.

Here, after being receive-signal-processed in a for-cellular radio transceiver 103, the separated received signal from the cellular network is supplied to a for-cellular data demodulator 104 to be demodulated.

The signal received from the cellular network and demodulated in the for-cellular data demodulator 104 is supplied to a data converter 107. The data converter 107 converts data received from the cellular network and demodulated, which data is usable in the cellular network, into data usable in the hotspot network.

The converted data for the hotspot network is supplied to a for-hotspot radio transceiver 105 and, after transmit-signal-processing such as frequency conversion is performed thereon, transmitted via the signal separating-combining section 102 from the antenna 101.

Meanwhile, the signal received from the hotspot network and separated by the signal separating-combining section 102 in the signal received via the antenna 101 is, after being receive-signal-processed in the for-hotspot radio transceiver 105, supplied to a for-hotspot data demodulator 106 to be demodulated.

The received signal from the hotspot network demodulated in the for-hotspot data demodulator 106 is supplied to the data converter 107. The data converter 107 converts data received from the hotspot network and demodulated, which data is usable in the hotspot network, into data usable in the cellular network.

The converted data for the cellular network is supplied to the for-cellular radio transceiver 103 and, after transmit-signal-processing such as frequency conversion is performed thereon, transmitted via the signal separating-combining section 102 from the antenna 101.

The signal separating-combining section 102 is configured to combine the transmit signal for the cellular network supplied from the for-cellular radio transceiver 103 and the transmit signal for the hotspot network supplied from the for-hotspot radio transceiver 105 and transmit.

In the communication system 120 having such a configuration, the communication terminal apparatus 100 has a function of receiving both the cellular network service and the hotspot network service.

Here, the state where the communication terminal apparatus 100 is connected to the cellular network will be explained. In this state, management control information about the communication terminal apparatus 100 is kept in the for-cellular communication terminal information manager 109.

The management control information kept includes location information of the communication terminal apparatus 100, QoS class of an application used, necessary transmit/receive rate, IP address, information about fee structure used by the user of the communication terminal apparatus 100, and the like. Information other than the above can also be kept.

In this state, when the communication terminal apparatus 100 enters a hotspot network area in the cellular network service area and receives the hotspot service (the hand-over occurring), information about the communication terminal apparatus 100 (the management control information and the like kept in the for-cellular communication terminal information manager 109) needs to be sent to the hotspot side before starting to use the hotspot. Accordingly, these information are sent to the hotspot side (for-hotspot communication terminal information manager 113) via the communication terminal apparatus 100 and not the Internet 116.

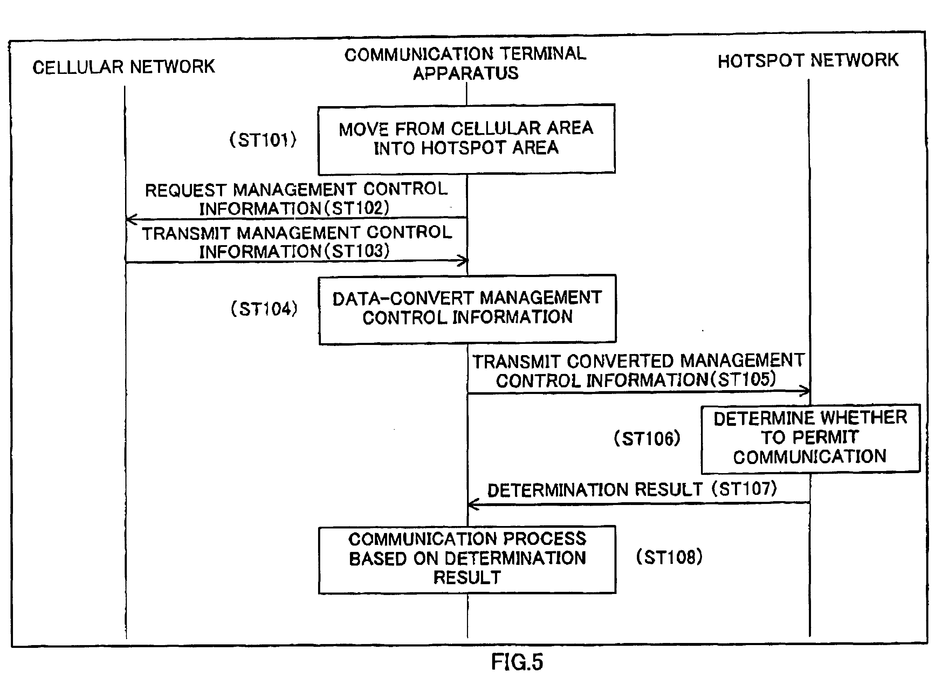

This operation will be explained. FIG. 5 is a sequence view for explaining the operation in the case where the communication terminal apparatus 100 enters a hotspot network service area from the cellular network service area and the hand-over occurs.

In FIG. 5, the communication terminal apparatus 100 determines whether it has entered the hotspot network service area based on the signal level and the like of the received signal (step ST101).

When determining that it has entered the hotspot network service area, the communication terminal apparatus 100 requests the management control information related to the communication terminal apparatus 100 from the for-cellular communication terminal information manager 109 of the cellular network from which it has moved (step ST102).

The for-cellular communication terminal information manager 109 having received this request transmits the management control information to the communication terminal apparatus 100 that is the sender of the request (step ST103).

In the communication terminal apparatus 100 having received the management control information from the for-cellular communication terminal information manager 109, the signal separating-combining section 102 supplies the received signal to the for-cellular radio transceiver 103 based on the received signal being a signal for the cellular network.

After performing radio receive processing on the received signal, the for-cellular radio transceiver 103 supplies this to the for-cellular data demodulator 104 to be demodulated into data, and thereby the actual management control information is taken as data out of the received signal.

The data taken out is supplied to the data converter 107, which converts to a format according to the hotspot network (step ST104). This format-converted data is transmitted via the for-hotspot radio transceiver 105, the signal separating-combining section 102, and the antenna 101 to the hotspot network (step ST105).

The management control information transmitted to the hotspot network is received by any of the for-hotspot radio transceiver 114, 115, or so forth and supplied to the for-hotspot communication terminal information manager 113.

The for-hotspot communication terminal information manager 113 having, in this way, received the management control information related to the communication terminal apparatus 100 and format-converted for the hotspot network determines whether to be able to satisfy QoS requirements and the like for the communication terminal apparatus 100 based on the management control information, and then determines whether to permit or refuse communication for the communication terminal apparatus 100 (step ST106). The determination result is transmitted to the communication terminal apparatus 100 via any of the for-hotspot radio transceiver 114, 115, or so forth (step ST107).

The communication terminal apparatus 100 having received the determination result establishes communication with the hotspot network when the determination result indicates a communication permission. On the other hand, when the determination result indicates a communication refusal, the communication terminal apparatus 100 continues to communicate with the cellular network with which communication is established, based on the determination result (step ST108).

By executing the process procedure shown in FIG. 5 in this way, in the hand-over, for example, from the cellular network to the hotspot network, the communication terminal apparatus 100 can transfer (or relay) the management control information related to the communication terminal apparatus 100 from the cellular network to the hotspot network, not via the Internet 116.

Therefore, compared with the case of transferring the management control information via the Internet 116 from the cellular network to the hotspot network, the process time for that is further shortened and thus the time required for the hand-over is also shortened. Moreover, because the management control information is transferred from the cellular network to the hotspot network not via a path such as the Internet 116, signal processing (Signaling) required for the transferring becomes less in amount.

Furthermore, because the management control information is transferred from the cellular network to the hotspot network via the communication terminal apparatus 100 concerned with the hand-over and not via the Internet 116, security is secured.

As described above, with the communication system 120 of the present embodiment and the apparatuses forming it, further smooth hand-over can be realized.

While, in the above embodiment, the communication terminal apparatus 100 detects by itself that it has entered the hotspot network service area, that is, it has moved into a place to which to hand over, the present invention is not limited to this. In the case where the communication terminal apparatus 100 reports its own position information obtained with a GPS (Global Positioning System) or the like, or information indicating the link state such as path loss and CIR (Carrier Interference Ratio) to the cellular network (network system from which it has moved), and where the cellular network having received the report has area information of the hotspot network, which is the destination, the cellular network can trigger the communication terminal apparatus 100 to start the hand-over. Other methods of triggering the hand-over can also be used for the present invention.

Moreover, while the above embodiment describes the case where the management control information related to the communication terminal apparatus 100 kept in the communication terminal information manager of a network (for example, the for-cellular communication terminal information manager 109) is transferred to the communication terminal information manager of another network (for example, the for-hotspot communication terminal information manager 113) via the communication terminal apparatus 100, the present invention is not limited to this. In the case where the communication terminal apparatus 100 keeps management control information, the communication terminal apparatus 100 may add the information and transfer it to the another network.

Moreover, while the above embodiment describes the case where the management control information related to the communication terminal apparatus 100 to be handed over is transferred via the communication terminal apparatus 100 to a hand-over destination network, the present invention is not limited to this, but it may be transferred via another communication terminal apparatus.

Furthermore, while the above embodiment describes the case where the cellular network and hotspot network systems are used as the plurality of network systems, the present invention is not limited to this, but various other networks can be used.

Yet further, it is shown that the radio section of the communication terminal apparatus 100 is common for the plurality of network systems, but individual radio sections can be provided.

While the above embodiment describes the case where the management control information is always transferred via the communication terminal, the for-cellular communication terminal information manager 109 may determine and select whether to transfer via the communication terminal or via a wired network such as the Internet. In this case, considered as criteria for the selection are the number of apparatuses that exist in between (generally called a hop number), transmission speed and throughput, the congestion state of the link, and the like.

### (Embodiment 2)

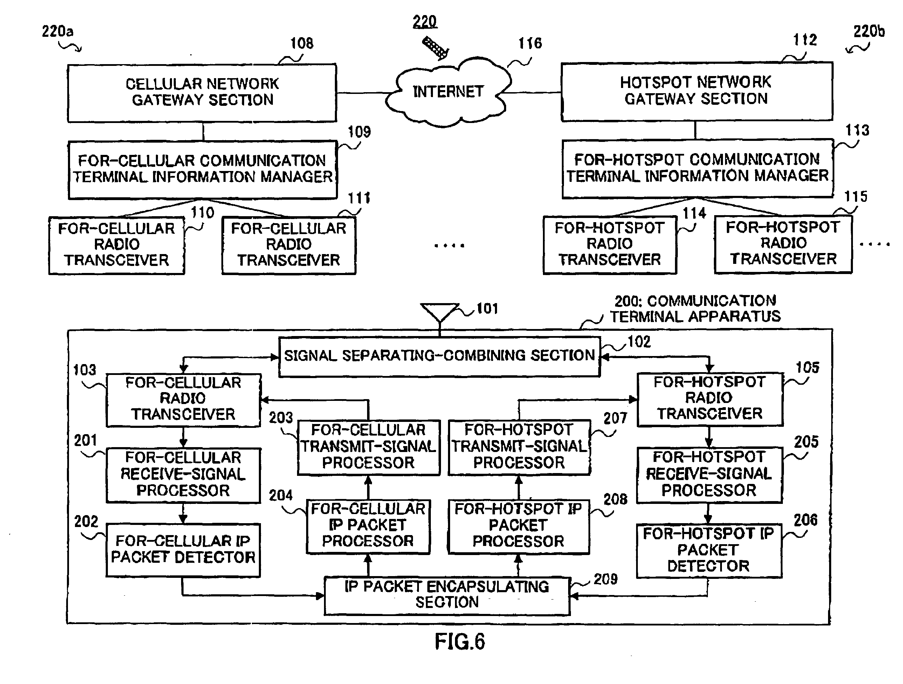

FIG. 6 is a block diagram showing the configuration of a communication terminal apparatus 200 used in a communication system 220 according to embodiment 2 of the present invention. The same parts as in FIG. 4 are indicated by the same reference numerals, and a detailed description thereof is omitted.

In the communication system 220 of FIG. 6, foreign kinds of network systems 220a and 220b are connected via the Internet 116. The first network system 220a has a cellular network gateway section 108 connected to the Internet 116, and information such as content is supplied from this cellular network gateway section 108 via a for-cellular communication terminal information manager 109 to each for-cellular radio transceiver 110, 111, or so forth. By this means, the information such as various content can be provided for communication terminal apparatuses 200 in the service areas of the for-cellular radio transceivers 110, 111, and so forth, and also information sent from a communication terminal apparatus 200 can be transferred via the Internet 116 to another communication terminal apparatus or a server.

The communication terminal apparatus 200 shown in FIG. 6 has a configuration on the premise of Mobile IPv6 (standard), and it is assumed that the apparatus 200 automatically creates a Care-of Address (temporarily assigned address) by stateless auto-configuration (combining a network ID and a user ID) using information including the network ID of an area where the communication terminal apparatus 200 currently is and the like and being called RA (Router Advertisement) which an AR (Access Router) periodically transmits, and its own user ID. Note that the present invention is not limited to Mobile IPv6 (standard), but can be applied to systems of other standards.

In the communication system 220 shown in FIG. 6, the communication terminal apparatus 200 can acquire the Care-of Address before receiving a communication permission from the hotspot network side. As a result, it is considered possible to transfer the management control information between the cellular network and the hotspot network in both directions. Hence, by encapsulating the management control information in the IP layer, it is possible to transfer the management control information between the cellular network and the hotspot network in both directions.

That is, the communication terminal apparatus 200 in FIG. 6 receives a signal from the cellular network by a for-cellular receive-signal processor 201 via an antenna 101, a signal separating-combining section 102, and a for-cellular radio transceiver 103.

After performing receive-signal processing such as decoding and de-interleaving on the received signal from the for-cellular radio transceiver 103, the for-cellular receive-signal processor 201 supplies to a for-cellular IP packet detector 202.

The for-cellular IP packet detector 202 takes an IP packet out of the received signal from the for-cellular receive-signal processor 201 and supplies to an IP packet encapsulating section 209.

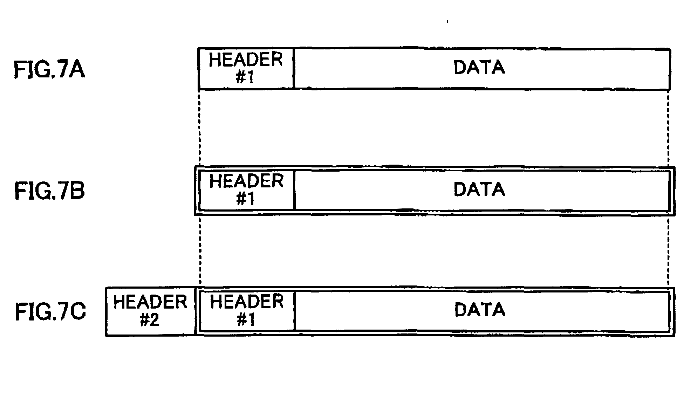

The IP packet encapsulating section 209 encapsulates the for-cellular IP packet received from the for-cellular IP packet detector 202. That is, the IP packet shown in FIG. 7A has a configuration where a header portion is added to a data portion. In this header portion, the IP address of the communication terminal apparatus 200 that the cellular network uses to transmit thereto and the IP address of the for-cellular communication terminal information manager 109 of the cellular network system for identifying the sender are written as header #1.

The IP packet encapsulating section 209 encapsulates the IP packet having the header portion and the data portion with the header portion included, which state is shown in FIG. 7B. The IP packet received from the cellular network and encapsulated in this way is supplied from the IP packet encapsulating section 209 to a for-hotspot IP packet processor 208 for the hotspot as the destination.

The for-hotspot IP packet processor 208 adds header information (header #2) having the IP address of the communication terminal apparatus 200 as the sender and the IP address of the for-hotspot communication terminal information manager 113 of the hotspot network as the destination to the encapsulated IP packet (FIG. 7B) as shown in FIG. 7C, and then supplies to a for-hotspot transmit-signal processor 207.

After performing transmit-signal processing such as encoding and interleaving on the IP packet supplied from the for-hotspot IP packet processor 208, the for-hotspot transmit-signal processor 207 transmits via the for-hotspot radio transceiver 105, the signal separating-combining section 102, and the antenna 101 to any of the for-hotspot radio transceivers 114, 115, and so forth in the hotspot network.

Then, in the hotspot network having received the transmitted signal, the for-hotspot communication terminal information manager 113 extracts the management control information related to the communication terminal apparatus 200 from the signal, and based on the management control information, determines whether to be able to satisfy QoS requirements and the like for the communication terminal apparatus 200, and then determines whether to permit or refuse communication for the communication terminal apparatus 200. The determination result is transmitted to the communication terminal apparatus 200 via any of the for-hotspot radio transceiver 114, 115, or so forth.

The communication terminal apparatus 200 having received the determination result establishes communication with the hotspot network when the determination result indicates a communication permission. On the other hand, when the determination result indicates a communication refusal, the communication terminal apparatus 200 continues to communicate with the cellular network with which communication is established, based on the determination result.

On the other hand, in the hand-over of the communication terminal apparatus 200 from the hotspot network to the cellular network, the communication terminal apparatus 200 in FIG. 6 receives a signal from the hotspot network by a for-hotspot receive-signal processor 205 via the antenna 101, the signal separating-combining section 102, and a for-hotspot radio transceiver 105.

After performing receive-signal processing such as decoding and de-interleaving on the received signal from the for-hotspot radio transceiver 105, the for-hotspot receive-signal processor 205 supplies to a for-hotspot IP packet detector 206.

The for-hotspot IP packet detector 206 takes an IP packet out of the received signal from the for-hotspot receive-signal processor 205 and supplies to the IP packet encapsulating section 209.

The IP packet encapsulating section 209 encapsulates the for-hotspot IP packet received from the for-hotspot IP packet detector 206. That is, the IP packet shown in FIG. 7A has a configuration where a header portion is added to a data portion. In this header portion, the IP address of the communication terminal apparatus 200 that the hotspot network uses to transmit thereto and the IP address of the for-hotspot communication terminal information manager 113 of the hotspot network system for identifying the sender are written as header #1.

The IP packet encapsulating section 209 encapsulates the IP packet having the header portion and the data portion with the header portion included, which state is shown in FIG. 7B. The IP packet received from the hotspot network and encapsulated in this way is supplied from the IP packet encapsulating section 209 to a for-cellular IP packet processor 204 for the cellular as the destination.

The for-cellular IP packet processor 204 adds header information (header #2) having the IP address of the communication terminal apparatus 200 as the sender and the IP address of the for-cellular communication terminal information manager 109 of the cellular network as the destination to the encapsulated IP packet (FIG. 7B) as shown in FIG. 7C, and then supplies to a for-cellular transmit-signal processor 203.

After performing transmit-signal processing such as encoding and interleaving on the IP packet supplied from the for-cellular IP packet processor 204, the for-cellular transmit-signal processor 203 transmits via the for-cellular radio transceiver 103, the signal separating-combining section 102, and the antenna 101 to any of the for-cellular radio transceivers 110, 111, and so forth in the cellular network.

Then, in the cellular network having received the transmitted signal, the for-cellular communication terminal information manager 109 extracts the management control information related to the communication terminal apparatus 200 from the signal, and based on the management control information, determines whether to be able to satisfy QoS requirements and the like for the communication terminal apparatus 200, and then determines whether to permit or refuse communication for the communication terminal apparatus 200. The determination result is transmitted to the communication terminal apparatus 200 via any of the for-cellular radio transceiver 110, 111, or so forth.

The communication terminal apparatus 200 having received the determination result establishes communication with the cellular network when the determination result indicates a communication permission. On the other hand, when the determination result indicates a communication refusal, the communication terminal apparatus 200 continues to communicate with the hotspot network with which communication is established, based on the determination result.

In the hand-over between foreign kinds of networks (for example, from the cellular network to the hotspot network), the communication terminal apparatus 200 can transfer the management control information related to the communication terminal apparatus 200 from the cellular network to the hotspot network, not via the Internet 116.

Therefore, compared with the case of transferring the management control information via the Internet 116 from the cellular network to the hotspot network, the process time for that is further shortened and thus the time required for the hand-over is also shortened. Moreover, because the management control information is transferred from the cellular network to the hotspot network not via a path such as the Internet 116, signal processing (Signaling) required for the transferring becomes less in amount.

Furthermore, because the management control information is transferred from the cellular network to the hotspot network via the communication terminal apparatus 200 concerned with the hand-over and not via the Internet 116, security is secured.

And, as a feature of this embodiment, because the IP packet encapsulating section 209 of the communication terminal apparatus 200 encapsulates the IP packet, it negate the need to convert the format of the management control information in the application layer , according to the destination network. Thus, by means of process only in the IP layer, the management control information can be easily transferred between the foreign kinds of networks via the communication terminal apparatus 200.

As described above, with the communication system 220 of the present embodiment and the apparatuses forming it, further smooth hand-over can be realized.

While, in the above embodiment, the communication terminal apparatus 200 detects by itself that it has entered the hotspot network service area, that is, it has moved into a place to which to hand over, the present invention is not limited to this. In the case where the communication terminal apparatus 200 reports its own position information obtained with a GPS (Global Positioning System) or the like to the cellular network (network system from which it has moved), and where the cellular network having received the report has area information of the hotspot network, which is the destination, the cellular network can trigger the communication terminal apparatus 200 to start the hand-over.

Moreover, while the above embodiment describes the case where the management control information related to the communication terminal apparatus 200 to be handed over is transferred via the communication terminal apparatus 200 to a hand-over destination network system, the present invention is not limited to this, but it may be transferred via another communication terminal apparatus.

Furthermore, while the above embodiment describes the case where the cellular network and hotspot network systems are used as the plurality of network systems, the present invention is not limited to this, but various other networks can be used.

Yet further, it is shown that the radio section of the communication terminal apparatus 200 is common for the plurality of network systems, but individual radio sections can be provided.

As described above, according to the present invention, information about a communication terminal apparatus used in a plurality of different network systems is relayed from a network system to another network system via the communication terminal apparatus. Thus, the hand-over of the communication terminal apparatus between the network systems can be performed further smoothly.

The present description is based on Japanese Patent Application No. 2002-211516 filed on July 19, 2002, which is herein incorporated by reference.

### INDUSTRIAL APPLICABILITY

The present invention can be applied to a communication system where a plurality of foreign kinds of networks are mixed such as a wireless LAN and a mobile phone system, a communication terminal apparatus used in the communication system, and a hand-over method.

## Claims

1. A communication system comprising:
a plurality of different network systems; and
a communication terminal apparatus that communicates with each of said plurality of network systems and relays information about the communication terminal apparatus used in one of said plurality of network systems to another network system.

2. A communication terminal apparatus comprising:
a communication section that communicates with each of a first network system and a second network system; and
a relaying section that relays information about the communication terminal apparatus received from said first network system to said second network system.

3. The communication terminal apparatus according to claim 2, wherein said relaying section converts said information about the communication terminal apparatus received from said first network system to a format usable in said second network system.

4. The communication terminal apparatus according to claim 2, wherein said relaying section encapsulates, on a per packet basis in IP-layer, data and header portions together of said information about the communication terminal apparatus received from said first network system, and adds the IP address of a destination in said second network system as header information to each encapsulated packet as a unit.

5. A hand-over method for a communication system comprising the steps of:
detecting that a communication terminal apparatus has moved from a first network system to a second network system; and
relaying information about said communication terminal apparatus used in said first network system to said second network system via said communication terminal apparatus, based on a result of said detecting.
